# EUROPÄISCHE PATENTANMELDUNG

(11) **EP 1 521 028 A1**
(43) Veröffentlichungstag der Anmeldung: **06.04.2005**
(21) Anmeldenummer: 04017685.1
(22) Anmeldetag: 26.07.2004
(51) Int. Cl.: F16L 37/092

(54) **Sicherheitssteckfitting**

(30) Priorität: 30.09.2003 DE 10345450
(71) Anmelder: Poloplast GmbH, 87640 Ebenhofen (DE)
(72) Erfinder: Stelzer, Robert, 87600 Kaufbeuern (DE); Birke, Karl, 87640 Bissenhofen (DE)
(74) Vertreter: Weber, Joachim, Dr.

(57) **Zusammenfassung**

Die Erfindung bezieht sich auf einen Sicherheitssteckfitting mit einem mit einer Durchgangsausnehmung 1 versehenen, einen Rohrstutzen 2 umfassenden Grundkörper 3 sowie mit einer den Rohrstutzen 2 umgebenden Rasthülse 4, welche zu dem Rohrstutzen 2 einen Ringraum 5 zum Einschieben eines Rohrs 6 bildet, wobei in dem Ringraum 5 zumindest eine Rastvorrichtung 7 angeordnet ist, dadurch gekennzeichnet, dass die Rasthülse 4 zumindest zum Teil aus einem transparenten oder transluzenten Werkstoff gefertigt ist.

## Beschreibung

Die Erfindung bezieht sich auf einen Sicherheitssteckfitting nach dem Oberbegriff des Hauptanspruchs.

Im Einzelnen bezieht sich die Erfindung auf einen Sicherheitssteckfitting, welcher dazu dient, ein Rohr an einem Grundkörper zu befestigen. Hierzu weist der Sicherheitssteckfitting einen Rohrstutzen mit einer Durchgangsausnehmung auf, auf welchen ein Rohr aufsteckbar ist. Zur Halterung des Rohrs ist eine Rasthülse vorgesehen, welche zu dem Rohrstutzen einen Ringraum bildet, wobei in dem Ringraum zumindest eine Rastvorrichtung angeordnet ist.

Aus dem Stand der Technik sind unterschiedlichste Ausgestaltungen derartiger Sicherheitssteckfittinge vorbekannt. Allen diesen ist gemeinsam, dass das Rohr vollständig auf den Rohrstutzen aufgeschoben werden muss, um eine ausreichende Dichtigkeit und eine ausreichende Halterung des Rohres an dem Steckfitting zu gewährleisten.

Bei der Montage von Rohrsystemen, beispielsweise für Trinkwasserleitungen oder Ähnliches, ist es vielfach schwierig, eine korrekte Montage des Rohres an dem Steckfitting überprüfen zu können. Es wurde vorgeschlagen, sogenannte "Klickscheiben" einzubauen, die akustisch das korrekte Einschieben des Rohres bis an einen Anschlag melden. Dies ist insbesondere in lauter Umgebung nicht immer zuverlässig wirksam. Auch bei einem langsamen Einschieben des Rohres kann es vorkommen, dass das Klickgeräusch nicht wahrnehmbar ist. Zudem ergibt sich bei einer späteren Kontrolle der Montage keine Überprüfungsmöglichkeit.

Der Erfindung liegt die Aufgabe zugrunde, einen Sicherheitssteckfitting der eingangs genannten Art zu schaffen, welcher bei einfachem Aufbau und einfacher, kostengünstiger Herstellbarkeit die Kontrolle der korrekten Montage jederzeit ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass die Rasthülse zumindest zum Teil aus einem transparenten Werkstoff gefertigt ist.

Durch eine derartige transparente oder transluzente Rasthülse ist es auf einfachste Weise möglich, zu kontrollieren, ob das Rohr korrekt und ausreichend weit auf den Rohrstutzen aufgeschoben ist und weiterhin ist es möglich, die Verrastung selbst zu kontrollieren und/oder die Funktionsfähigkeit der Rastvorrichtung zu überprüfen.

Der erfindungsgemäße Sicherheitssteckfitting zeichnet sich durch eine Reihe erheblicher Vorteile aus. Durch die transparente oder transluzente Ausgestaltung der Rasthülse kann der innen liegende Bereich des Sicherheitssteckfittings jederzeit optisch kontrolliert werden. Dies gilt nicht nur für den reinen Montagevorgang, sondern auch für spätere Kontrollen. So kann jederzeit überprüft werden, ob das Rohr sich von dem Rohrstutzen gelöst oder von diesem zurückgezogen wurde. Weiterhin ist in gewissem Maße auch eine Überprüfung der Dichtigkeit möglich, da austretende Fluide ebenfalls sichtbar sein können.

In besonders günstiger Ausgestaltung der Erfindung kann vorgesehen sein, dass mehrere Rastvorrichtungen vorgesehen sind, welche durch eine ebenfalls zumindest zum Teil transparente Distanzhülse voneinander getrennt sind. Somit kann auch bei mehreren Rastvorrichtungen die korrekte Montage jederzeit überprüft werden.

Erfindungsgemäß ist es auch möglich, die Lage der Rastvorrichtungen jederzeit zu kontrollieren. Auf diese Weise wird verhindert, dass Rastvorrichtungen beispielsweise verkippen oder verkanten und dadurch nicht funktionsfähig sind.

Die erfindungsgemäß erwähnten Rastvorrichtungen können in Form von Torsionsringen oder in Form metallischer Bauelemente ausgebildet sein, so wie dies aus dem Stand der Technik bekannt ist.

Um die Rastvorrichtungen sicher zu platzieren, kann es günstig sein, diese mittels einer ebenfalls zumindest zum Teil transparenten oder transluzenten Stützhülse zu haltern. Somit stört die mechanische Verankerung und Lagerung der Rastvorrichtungen nicht die Durchsichtigkeit der gesamten Konstruktion.

Die Rasthülse, die Distanzhülse und/oder die Stützhülse können erfindungsgemäß aus einem farblosen transparenten oder transluzenten Material gefertigt sein. Es ist jedoch auch möglich, diese aus einem farbigen transparenten Material herzustellen, welches auch insgesamt zu einer optischen Unterscheidbarkeit sowohl der einzelnen Bauteile untereinander sowie des gesamten Sicherheitssteckfittings dienen kann. So können unterschiedlich große Sicherheitssteckfittings farblich unterschiedlich ausgebildet sein. Durch die Möglichkeit, einzelne Bauelemente, wie beispielsweise die Distanzhülse oder die Stützhülse aus einem andersfarbigen Material zu fertigen, kann der Montagevorgang zusätzlich überprüfbar und nachkontrollierbar sein.

Besonders vorteilhaft ist es, wenn die zumindest zum Teil transparenten oder transluzenten Bauelemente aus Kunststoff oder auch aus anderen polymeren Kunststoffen gefertigt sind. Hierdurch lassen sich die Herstellungskosten ganz erheblich reduzieren.

Um ein Verkratzen insbesondere der Rasthülse zu verhindern, kann diese auch mit opaken Bereichen versehen sein, welche beispielsweise in Form erhabener Stützringe ausgebildet sind. Die restlichen Bereiche der Rasthülse sind dann beispielsweise mit einer glänzenden und glatten Oberfläche versehen, welche die optische Kontrolle verbessert. Diese durchschaubaren Bereiche sind dann durch die Stützringe vor Kratzern oder ähnlichem geschützt.

Der erfindungsgemäße Sicherheitssteckfitting ist für unterschiedlichste Rohre einsetzbar, diese können als einfache Kunststoffrohre oder auch als ummantelte Rohre oder als Metall- oder Alu-Verbundrohre ausgebildet sein.

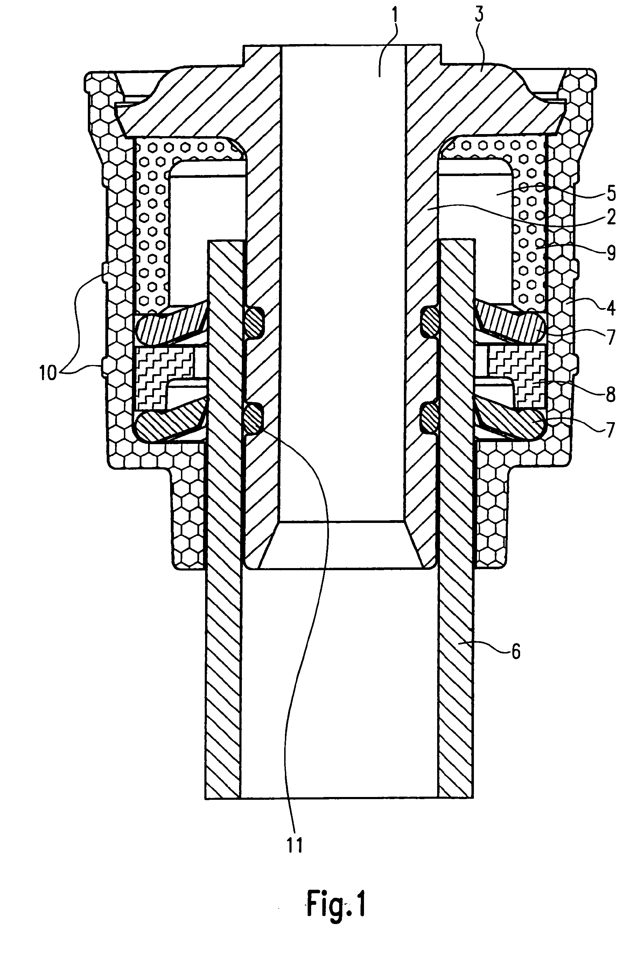

Im Folgenden wird die Erfindung anhand eines Ausführungsbeispiels in Verbindung mit der Zeichnung beschrieben. Dabei zeigt die einzige Figur eine Längs-Schnittansicht eines erfindungsgemäßen Sicherheitssteckfittings.

Der in der Figur gezeigte Steckfitting umfasst einen Grundkörper 3, der mit einer Durchgangsausnehmung 1 zur Durchströmung mit einem Fluid versehen ist. Der Grundkörper 3 kann Teil eines beliebigen Fittings sein, er kann auch spiegelbildlich aufgebaut sein, um zwei Rohrenden zu verbinden.

An dem Grundkörper 3 ist ein Rohrstutzen 2 ausgebildet, welcher so dimensioniert ist, dass ein Rohr 6 aufschiebbar ist. Die Abdichtung zwischen dem Rohrstutzen 2 und dem Rohr 6 erfolgt mittels O-Ringen 11, welche in entsprechende Nuten des Rohrstutzens 2 eingelegt sind.

Auf den Grundkörper 3 ist formschlüssig eine Rasthülse 4 aufgeklickt. Diese bildet mit dem Rohrstutzen 2 einen Ringraum 5, in welchen das Rohr 6 einschiebbar ist.

In dem Ringraum 5 sind zwei Rastvorrichtungen 7 angeordnet, welche in Form eines Torsionsrings oder eines metallischen Rastrings oder Kunststoff-Metall-Verbundrings mit entsprechenden Krallen ausgebildet sein können. Diese weichen beim Einschieben des Rohrs 6 zurück. Ein Zurückziehen des Rohrs führt zu einer entsprechenden Verkrallung. Erfindungsgemäß sind auch andere Konstruktionen verwendbar.

Die beiden Rastvorrichtungen 7 sind durch eine Distanzhülse 8 voneinander beabstandet. Die weiter vorne liegende Rastvorrichtung 7 ist mittels einer Stützhülse 9 abgestützt und positioniert.

Erfindungsgemäß sind die Rasthülse 4, die Distanzhülse 8 sowie die Stützhülse 9 aus einem transparenten oder transluzenten Material gefertigt, sodass der Montage- und Einschiebvorgang jederzeit kontrolliert werden kann. Bei dem gezeigten Ausführungsbeispiel ist das Rohr 6 noch nicht vollständig in den Ringraum 5 eingeschoben, sodass sich eine nicht-korrekte Montagestellung ergeben würde. Bei nicht-transparenter bzw. opaker oder nicht-transluzenter Rasthülse 4 wäre dies nicht kontrollierbar und bemerkbar.

Um Beschädigungen, beispielsweise ein Verkratzen der Oberfläche der Rasthülse 4 zu verhindern, sind ringförmige erhabene Stützringe vorgesehen, die beispielsweise opak sein können (Bezugszeichen 10). Diese Erhebung kann auch durch eine pyramidenartige oder ähnliche Form ausgebildet sein.

Es versteht sich, dass erfindungsgemäß sämtliche der beschriebenen Teile transparent oder transluzent sein können. Es ist jedoch auch möglich, diese nur teilweise transparent oder transluzent auszubilden, beispielsweise in Längsstreifen, sodass sich, etwa durch farbige Gestaltung oder durch eine farbige Bedruckung, die Möglichkeit ergibt, Dekorationselemente, Beschriftungen oder Ähnliches aufzubringen.

Der erfindungsgemäße Sicherheitssteckfitting gewährleistet somit auf einfachste Weise eine hervorragende Kontrolle des Montagezustands, wodurch sich die Betriebssicherheit des zwischen dem Rohr und dem Sicherheitssteckfitting gebildeten Verbindungsbereich überprüfen lässt.

### Bezugszeichenliste

- 1: Durchgangsausnehmung
- 2: Rohrstutzen
- 3: Grundkörper
- 4: Rasthülse
- 5: Ringraum
- 6: Rohr
- 7: Rastvorrichtung
- 8: Distanzhülse
- 9: Stützhülse
- 10: Opaker Bereich
- 11: O-Ring

## Patentansprüche

1. Sicherheitssteckfitting mit einem mit einer Durchgangsausnehmung (1) versehenen, einen Rohrstutzen (2) umfassenden Grundkörper (3), sowie mit einer den Rohrstutzen (2) umgebenden Rasthülse (4), welche zu dem Rohrstutzen (2) einen Ringraum (5) zum Einschieben eines Rohrs (6) bildet, wobei in dem Ringraum (5) zumindest eine Rastvorrichtung (7) angeordnet ist, **dadurch gekennzeichnet, dass** die Rasthülse (4) zumindest zum Teil aus einem transparenten oder transluzenten Werkstoff gefertigt ist.

2. Sicherheitssteckfitting nach Anspruch 1, **dadurch gekennzeichnet, dass** mehrere, durch eine zumindest zum Teil aus einem transparenten oder transluzenten Werkstoff gefertigte Distanzhülse (8) getrennte Rastvorrichtungen (7) vorgesehen sind.

3. Sicherheitssteckfitting nach Anspruch 1 oder 2, **dadurch gekennzeichnet, dass** die Rastvorrichtung (7) mittels zumindest einer zumindest zum Teil aus einem transparenten oder transluzenten Werkstoff gefertigten Stützhülse (9) gehaltert ist.

4. Sicherheitssteckfitting nach einem der Ansprüche 1 bis 3, **dadurch gekennzeichnet, dass** die Rasthülse (4), die Distanzhülse (8) und/oder die Stützhülse (9) aus einem farblosen Material gefertigt sind.

5. Sicherheitssteckfitting nach einem der Ansprüche 1 bis 3, **dadurch gekennzeichnet, dass** die Rasthülse (4), die Distanzhülse (8) und/oder die Stützhülse (9) aus einem farbigen transparenten oder transluzenten Material gefertigt sind.

6. Sicherheitssteckfitting nach einem der Ansprüche 1 bis 5, **dadurch gekennzeichnet, dass** die Rasthülse (4), die Distanzhülse (8) und/oder die Stützhülse (9) aus Kunststoff gefertigt sind.

7. Sicherheitssteckfitting nach einem der Ansprüche 1 bis 6, **dadurch gekennzeichnet, dass** die Rasthülse (4) opake Bereiche (10) umfasst.

8. Sicherheitssteckfitting nach Anspruch 7, **dadurch gekennzeichnet, dass** die opaken Bereiche (10) in Form erhabener Stützringe oder Erhebungen ausgebildet sind.
